# EUROPÄISCHE PATENTANMELDUNG

(11) **EP 4 700 526 A1**
(43) Veröffentlichungstag der Anmeldung: **25.02.2026**
(21) Anmeldenummer: 25167491.7
(22) Anmeldetag: 31.03.2025
(51) Int. Cl.: G05D 16/20

(54) **STEUERVORRICHTUNG UND GASDRUCKREGELGERÄT**

(30) Priorität: 03.04.2024 DE 102024109279
(71) Anmelder: Westnetz GmbH, 44139 Dortmund (DE)
(72) Erfinder: Ewering, Dietmar, 48565 Steinfurt (DE); Penczek, Torben, 45772 Marl (DE)
(74) Vertreter: Bals & Vogel Patentanwälte PartGmbB

(57) **Zusammenfassung**

Die Erfindung betrifft eine Steuervorrichtung (100) für ein Gasdruckregelgerät (200) mit einem Einstellelement(210) zum Regeln eines Druckverlaufs zwischen einem Hochdruckbereich (310) und einem Niederdruckbereich (320) eines Gasnetzes (300), aufweisend:
- einen Aktor (110), welcher dazu ausgeführt ist, das Einstellelement(210) zu bewegen,
- einen Adapter (120), welcher mit dem Aktor (110) verbunden und dazu ausgeführt ist, an einem Dom (220), in dem das Einstellelement(210) angeordnet ist, befestigt zu werden,
- eine Kommunikationsvorrichtung (130), welche dazu ausgeführt ist, zumindest ein Steuersignal (10) zum Steuern des Aktors (110) zu empfangen und an den Aktor (110) zu übermitteln,
wobei das Steuersignal (10) von einer von der Kommunikationsvorrichtung (130) beabstandeten Netzsteuerung (330) sendbar ist. Ferner betrifft die Erfindung ein Gasdruckregelgerät (200).

## Beschreibung

Die Erfindung betrifft eine Steuervorrichtung für ein Gasdruckregelgerät sowie ein Gasdruckregelgerät.

Gasnetze sind entscheidend für die Energieinfrastruktur, da sie den Transport von Gas über große Entfernungen ermöglichen, um sowohl Wohn- als auch Gewerbegebiete mit Energie zu versorgen. Sie gewährleisten Versorgungssicherheit, ermöglichen den Transport von Gas vom Herstellungsort zu Verbrauchszentren, bieten Flexibilität und Speichermöglichkeiten und unterstützen erneuerbare Energien durch die Integration von Wasserstoff.

Gasnetze weisen in der Regel Hoch-, Mittel- und Niederdruckbereiche auf, um den unterschiedlichen Anforderungen und Bedingungen gerecht zu werden. Der Hochdruckbereich umfasst Abschnitte des Gasnetzes, in denen der Druck des transportierten Gases hoch ist. Dieser Bereich befindet sich typischerweise in den Hauptleitungen und großen Pipelines, die Gas über große Entfernungen transportieren. Der Druck im Hochdruckbereich kann je nach Netz und Gegebenheiten variieren, liegt jedoch normalerweise über einem bestimmten Schwellenwert, der als Hochdruck definiert ist. Der Mittel- und Niederdruckbereich bezieht sich auf Abschnitte des Gasnetzes, in denen der Druck niedriger ist und sich in der Nähe von Verbrauchern befindet. Diese Bereiche haben typischerweise niedrigere Druckniveaus, die sicherstellen, dass das Gas sicher und effizient zu den Verbrauchern gelangt.

Um den Druck zwischen diesen beiden Netzbereichen zu regulieren, werden Gasdruckregelanlagen eingesetzt.

Das Aufkommen von Wasserstoff im Gasnetz bringt jedoch einige Veränderungen mit sich, insbesondere im Mischbetrieb mit Erdgas, sodass Anpassungen der Infrastruktur und Druckregelungsanlagen nötig sein können.

Die aktuell in Gasdruckregeanlagen eingesetzten Regelgeräte verfügen über eine Einstellmöglichkeit über z. B. eine Feder und oder einen Hilfsdruckregler mit ebensolcher Feder. Durch die entsprechende Voreinstellung an diesem Bauteil des Regelgerätes wird der gewünschte Sollwert für den Ausgangsdruck in Abhängigkeit des vorhandenen Eingangsdruckes eingestellt. Möchte man den Ausgangsdruck aufgrund von geänderten Vorgaben und/oder Kundenwünschen anpassen, so ist ein manueller Eingriff vor Ort durch einen sachkundigen Regelgerätespezialisten und ggf. weitere mindestens fachkundige Personen erforderlich.

Es ist daher eine Aufgabe der vorliegenden Erfindung, wenigstens einen der voranstehend beschriebenen Nachteile zumindest teilweise zu überwinden. Insbesondere ist es Aufgabe der Erfindung, eine Steuervorrichtung für ein Gasdruckregelgerät sowie ein Gasdruckregelgerät bereitzustellen, welche flexibel, auch aus der Ferne, steuerbar sind und an wechselnde Anforderungen in Bezug auf Drücke im Gasnetz angepasst werden können.

Die voranstehende Aufgabe wird gelöst durch eine Steuervorrichtung sowie durch ein Gasdruckregelgerät. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Steuervorrichtung beschrieben sind, selbstverständlich auch im Zusammenhang mit dem erfindungsgemäßen Gasdruckregelgerät und jeweils umgekehrt, sodass bezüglich der Offenbarung zu den einzelnen Erfindungsaspekten stets wechselseitig Bezug genommen wird bzw. werden kann.

Erfindungsgemäß vorgesehen ist eine Steuervorrichtung für ein Gasdruckregelgerät mit einem Einstellelement zum Regeln eines Druckverlaufs zwischen einem Hochdruckbereich und einem Mittel- und/oder Niederdruckbereich eines Gasnetzes, aufweisend:
- einen Aktor, welcher dazu ausgeführt ist, das Einstellelement zu bewegen,
- einen Adapter, welcher mit dem Aktor verbunden und dazu ausgeführt ist, an einem Dom, in dem das Einstellelement angeordnet ist, befestigt zu werden,
- eine Kommunikationsvorrichtung, welche dazu ausgeführt ist, zumindest ein Steuersignal zum Steuern des Aktors zu empfangen und an den Aktor zu übermitteln,
wobei das Steuersignal von einer von der Kommunikationsvorrichtung beabstandeten Netzsteuerung sendbar ist.

Mit anderen Worten kann erfindungsgemäß eine Vorrichtung vorgesehen sein, welche eine Stelleinheit zum Verfahren eines Druckregelelementes zum Einstellen eines Druckunterschiedes zwischen einem Hoch- und Mittel- und/oder Niederdruckbereich eines Gasnetzes, ein Befestigungsmittel zum Verbinden der Stelleinheit mit einem Dom, in dem das Druckregelelement angeordnet ist, sowie eine Empfangseinheit zum Empfangen von Signalen einer von Vorrichtung beabstandeten Netzsteuerung aufweist.

Eine Steuervorrichtung für ein Gasdruckregelgerät kann als eine Vorrichtung aufgefasst werden, welche dazu geeignet ist, ein Gasdruckregelgerät zumindest in seiner Hauptfunktion, dem Regeln eines Gasdruckes zwischen einer Hoch- und Niederdruckseite, zu steuern. Die Steuervorrichtung kann dabei - wie gemäß dem zweiten Aspekt der Erfindung beschrieben - als Teil des Gasdruckregelgerätes ausgeführt sein. Alle Ausführungen, die bezüglich der Elemente des Gasdruckregelgeräts im Zusammenhang mit der Steuervorrichtung gemacht werden, gelten auch im Zusammenhang mit diesem zweiten Aspekt der Erfindung.

Ein Einstellelement kann zumindest als einzelnes Bauteil oder als Baugruppe aufgefasst werden, welches dazu dient, den Druckverlauf des Gasdruckregelgerätes einzustellen. Mit anderen Worten kann das Einstellelement auch zumindest als Teil eines Regelventils aufgefasst werden. Das Einstellelement kann ein Verschlusselement umfassen, das zwischen einer geschlossenen Position, in zumindest wenig oder kein Gas das Einstellelement passieren kann, und einer offenen Position, das Gas zumindest mit wenig oder ohne Druckverlust das Einstellelement passieren kann, bewegbar ist. Die Bewegung des Verschlusselements kann durch einen Übertrager erfolgen, welcher zumindest als Feder, insbesondere als Drehfeder, oder als Stange ausgeführt sein kann.

Unter dem Regeln eines Druckverlaufs kann im Rahmen der Erfindung das Einstellen des Verhältnisses zwischen einer Hoch- und Mittel- und/oder Niederdruckseite des Gasdruckregelgerätes verstanden werden. Dabei kann sich das Druckniveau sowohl auf der Hochdruckseite (beispielsweise durch geänderte Einspeisung) als auch auf der Mittel- und/oder Niederdruckseite (durch geänderte Abnahme) ändern, ohne dass das Gasdruckregelgerät eingreift. Zusätzlich können Temperatur- und Umgebungsdruckänderungen ebenfalls den Druckverlauf im Ventil beeinflussen, da sie die Dichte und das Verhalten des Gases beeinflussen können.

Prinzipiell zeichnen sich ein Hochdruckbereich und ein Mittel- und/oder Niederdruckbereich gemäß der Erfindung dadurch aus, dass im Hochdruckbereich ein höherer Gasdruck herrscht als im Mittel- und/oder Niederdruckbereich und umgekehrt. Das führt dazu, dass das Gas vom Hochdruckbereich in den Mittel- und/oder Niederdruckbereich strömt. Es kann vorgesehen sein, dass das Gasdruckregelgerät an einem Übergang zwischen zwei Netzbereichen angeordnet ist. Gasnetze lassen sich zumindest in Ferntransportbereiche, insbesondere mit einem Gasdruck zwischen 60 und 100 bar, Regionaltransportbereiche, insbesondere mit einem Gasdruck zwischen 10 und 20 bar oder Lokaltransportbereiche, insbesondere mit einem Gasdruck von weniger als 5 bar, unterteilten (wobei die angegebenen Drücke sich auf den Überdruck gegenüber der umgebenden Atmosphäre beziehen). Es kann also vorgesehen sein, dass das Gasdruckregelgerät dazu ausgeführt ist, die Druckdifferenz zwischen zwei Netzbereichen bereitzustellen. Ferner kann vorgesehen sein, dass das Gasdruckregelgerät innerhalb eines Netzbereiches angeordnet ist.

Ein Aktor kann zumindest als eine Vorrichtung oder eine Baugruppe aufgefasst werden, die dazu ausgeführt ist, ein, insbesondere elektrisches, Steuersignal in eine mechanische Bewegung umzusetzen. Der Aktor kann einen Motor umfassen. Ferner kann der Motor einen Direktantrieb oder ein Getriebe umfassen, die dazu ausgeführt sind, vom Motor bereitgestellte Momente auf das Einstellelement zu übertragen. Der Motor kann zumindest elektrisch, pneumatisch, insbesondere mit Luft oder einem von Luft unterschiedlichen Gas, oder hydraulisch ausgeführt sein. Ferner kann vorgesehen sein, dass der Aktor eigensicher ausgeführt ist. Eigensicher bedeutet, dass der Aktor aufgrund seiner Konstruktion sicherstellt, dass selbst im Fehlerfall kein unsicherer Zustand auftritt. Hierzu kann insbesondere eine Begrenzung zumindest der Stromstärke oder Spannung vorgesehen auf Werte vorgesehen sein, die eine Entzündung von explosionsfähigen Brennstoff-Luft-Gemischen sowohl durch Funken als auch durch Erwärmung verhindern. Ferner kann der Aktor zumindest ein konstruktives Explosionsschutzmerkmal aufweisen. Das konstruktive Explosionsschutzmerkmal kann als zumindest explosionsdruckstoßfeste Bauweise, Flammdurchschlagsicherung oder automatische Schnellschlusseinrichtung ausgeführt sein.

Ferner kann das Gasdruckregelgerät zumindest ein Sicherheitsabsperrventil (SAV) oder ein Sicherheitsabblaseventil (SBV) umfassen. Ein Sicherheitsabsperrventil kann dazu ausgeführt sein, beim Vorliegen eines unzulässigen Druckes den Hochdruckbereich vom Mittel- und/oder Niederdruckbereich zu trennen. Das Sicherheitsabsperrventil (SAV) kann stromabwärts des Einstellelements angeordnet sein. Ein Sicherheitsabblaseventil kann dazu ausgeführt sein, beim Vorliegen eines unzulässig hohen Druckes Gas an die Atmosphäre abzugeben. Das Sicherheitsabblaseventil kann stromabwärts zumindest des Einstellelements oder des Sicherheitsabblaseventils angeordnet sein. Ferner kann das Sicherheitsabblaseventil dazu ausgeführt sein, bei starker Verbrauchsänderung und verzögertem Regeln des Gasdruckregelgerätes ein Schließen des Sicherheitsabsperrventils zu verhindern.

Es kann vorgesehen sein, dass eine Erfassung der SAV und SBV Einstellwerte, insbesondere durch SAV und/oder SBV Stellsensoren, vorgesehen ist. Ferner kann das Steuersignal, welche insbesondere auf den Einstellwerten basiert, Steuerungswerte zum Ansteuern einer Aktorik des SAV und/oder SBV umfassen.

Das Bewegen des Einstellelements kann das Bewegen zwischen einer geschlossenen Position, in zumindest wenig (insbesondere ausschließlich im Rahmen technisch bedingter Leckage) oder kein Gas das Einstellelement passieren kann, und einer offenen Position, das Gas zumindest mit wenig oder ohne Druckverlust das Einstellelement passieren kann, umfassen. Die Bewegung kann zumindest als Linear- oder Drehbewegung ausgeführt sein.

Es kann vorgesehen sein, dass zur Steuerung der Bewegung zumindest ein Regler, insbesondere zumindest ein Proportional-, Integral- oder Differenzialregler, vorgesehen ist. Hierdurch kann ein Ausgangsdruck des Gasdruckregelgerätes besonders schnell und genau an einen Vorgabewert angepasst werden.

Ein Adapter kann als eine Vorrichtung aufgefasst werden, welche dazu ausgeführt ist, eine Verbindung zwischen zwei oder mehreren Objekten herzustellen, die nicht direkt miteinander kompatibel sind. Vorliegend kann ein Adapter also als Vorrichtung zum Verbinden des Aktors mit dem Dom des Gasdruckregelgerätes aufgefasst werden. Es kann vorgesehen sein, dass der Adapter zumindest teilweise einer Regeldomkappe entspricht, welche auf einem Dom eines Regelventils befestigbar ist. Es kann vorgesehen sein, dass der Adapter einen Schnellverschluss aufweist. Dadurch lässt sich der Adapter und insbesondere auch die Steuervorrichtung insgesamt schnell durch eine reguläre Regeldomkappe ersetzen, sollte dies erforderlich sein. Ein Schnellverschluss kann als Bajonettverschloss, Gelenkverschluss oder Schraubgewindeverschluss ausgeführt sein.

Eine Kommunikationsvorrichtung kann dazu dienen, ein Steuersignal zum Steuern des Aktors zu empfangen und an den Aktor zu übermitteln. Die Kommunikationsvorrichtung kann als Datenfernübertragung-Modul (auch DFÜ genannt) ausgeführt sein. Bei einer DFÜ Verbindung werden Daten über ein Medium, insbesondere zumindest ein Telefonnetz, Funk oder Licht, übertragen. Ferner kann die Kommunikationsvorrichtung als Electronic Data Interchange (EDI) ausgeführt sein. Das Steuersignal kann zumindest als analoges Steuersignal, digitales Steuersignal, Pulsweitenmodulations-Signal, oder Frequenzmodulations-Signal ausgeführt sein. Das Steuersignal kann insbesondere einen Sollwert zumindest für das Einstellelement oder den Aktor umfassen.

Die Kommunikationsvorrichtung kann ferner dazu ausgeführt sein, ein Signal, insbesondere an eine Netzsteuerung, zu senden. Das gesendete Signal kann insbesondere einen zumindest für die Steuervorrichtung oder das Gasdruckregelgerät spezifischen Wert, insbesondere einen Istwert zumindest des Aktors oder des Einstellelementes umfassen.

Unter einer von der Kommunikationsvorrichtung beabstandeten Netzsteuerung kann jede Vorrichtung verstanden werden, welche nicht Teil der Kommunikationsvorrichtung selbst ist. Der Abstand kann verhältnismäßig klein sein, etwa wenn eine Person mit einem Netzsteuerungsgerät einer Netzsteuerung sich nahe an der Steuervorrichtung befindet und die Wirkung des gesendeten Steuersignals vor Ort überprüft. Der Abstand kann jedoch auch groß sein und insbesondere zumindest 100 m betragen. Die Netzsteuerung kann als Netzleitwarte oder als mobiles Netzsteuergerät, insbesondere zumindest als Tablet oder Smartphone, ausgeführt sein. Zum Empfang des Steuersignals kann die Kommunikationsvorrichtung eine Schnittstelle aufweisen. Die Schnittstelle kann dazu ausgeführt sein, die Kommunikationsvorrichtung zumindest mit einem Local Area Network, einem Wide Area Network oder dem Internet zu verbinden. Die Kommunikationsvorrichtung kann zumindest für drahtlose Kommunikation, eine Kommunikation über Draht oder eine Kommunikation über Glasfaser ausgeführt sein. Ferner kann die Kommunikationsvorrichtung ein Bluetooth-, Wifi- oder Zigbeemodul umfassen.

Ebenfalls vorgesehen sein kann eine Recheneinheit, welche dazu ausgeführt ist, zumindest die Kommunikationsvorrichtung oder den Aktor zu steuern. Es ist denkbar, dass die Recheneinheit Teil der Kommunikationsvorrichtung ist und umgekehrt. Die Recheneinheit kann Teil der Steuervorrichtung sein oder beabstandet, insbesondere als Teil der Netzsteuerung, ausgeführt sein. Die Recheneinheit kann ferner dazu ausgeführt sein, das durch die Kommunikationseinheit empfangene Steuersignal zu verarbeiten und entsprechend des verarbeiteten Steuersignals den Aktor anzusteuern. Ferner kann die Recheneinheit dazu ausgeführt sein, zumindest ein Sensorsignal, insbesondere umfassend zumindest einen IstWert, insbesondere zumindest des Aktors oder des Einstellelementes, zumindest zu empfangen, zu verarbeiten oder den Versand über die Kommunikationsvorrichtung zu steuern.

Insgesamt bietet ein erfindungsgemäße Steuervorrichtung den Vorteil, ein Gasdruckregelgerät flexibel, auch aus der Ferne, steuern und an wechselnde Anforderungen in Bezug auf Drücke im Gasnetz anpassen zu können. Der Aktor kann das Stellelement entsprechend eines Steuersignals bewegen, sodass das Einstellelement den Druckverlauf des Gasdruckregelgerätes einstellt. Durch den Adapter kann der Aktor einfach, schnell und kostengünstig auf den Dom des Gasdruckregelgerätes gesetzt und bei Bedarf auch wieder abgenommen werden. Durch die Kommunikationsvorrichtung kann das Steuersignal auch dann an den Aktor übergeben werden, wenn kein unmittelbarer physikalischer Zugriff der steuernden Person gegeben ist. Dadurch kann beispielsweise auf die wechselnden Anforderungen (z. B. schwankende Drücke beim Wechsel des Gases oder im Mischbetrieb), welche durch den Betrieb des Gasnetzes mit Wasserstoff entstehen können, flexibler reagiert werden.

Im Rahmen der Erfindung kann es von Vorteil sein, dass zumindest der Aktor, der Adapter oder die Kommunikationsvorrichtung dazu ausgeführt sind, als Retrofit zumindest an einem manuell betriebenen oder lokal gesteuerten Gasdruckregelgerät angeordnet zu werden. Unter einem Retrofit kann eine Vorrichtung verstanden werden, die dazu ausgeführt ist, zumindest einen Teil einer Baugruppe zumindest zu ersetzen oder zu ergänzen und dadurch die Funktionalität der Baugruppe zu erweitern. Es kann vorgesehen sein, dass der Aktor einen manuellen Stellantrieb ersetzt. Ferner kann vorgesehen sein, dass der Adapter einen Abschluss des Doms, insbesondere an dem der manuelle Stellantrieb befestigbar ist, zu ersetzen. Durch die Ausführung als Retrofit wird der Vorteil erreicht, dass auch Gasdruckregelgeräte mit manueller Steuerung ohne großen Aufwand funktionell dahingehend ergänzt werden können, dass eine Steuerung aus der Ferne ermöglicht wird.

Im Rahmen der Erfindung ist es denkbar, dass eine Gegenhalterung vorgesehen ist, welche dazu ausgeführt ist, am Dom befestigt zu werden und Momente des Aktors aufzunehmen. Es kann insbesondere vorgesehen sein, dass die Gegenhalterung dazu ausgeführt ist, zumindest ein maximales Moment, insbesondere Drehmoment, des Aktors aufzunehmen. Hierdurch wird sichergestellt, dass die Verbindung zwischen dem Adapter und dem Aktor mit dem Dom auch dann sicher hält, wenn der Aktor das Einstellelement mit dem maximalen Moment verstellt. Zudem kann mit einer an den Dom angepassten Gegenhalterung die Montage vereinfacht werden.

Es kann im Rahmen der Erfindung vorgesehen sein, dass eine Anzeige vorgesehen ist, die dazu ausgeführt ist, zumindest einen Wert anzuzeigen, welcher für den Zustand zumindest des Gasdruckregelgerätes, des Aktors oder der Kommunikationsvorrichtung spezifisch ist. Dies bietet den Vorteil, dass der Zustand zumindest des Gasdruckregelgerätes, des Aktors oder der Kommunikationsvorrichtung unmittelbar erfasst werden kann, ohne dass das Gasdruckregelgerät geöffnet werden muss. Darüber hinaus kann vorgesehen sein, dass das Display dazu ausgeführt ist, den Zustand in einer Art und Weise anzuzeigen, die von einer Kamera aufgenommen werden kann. Hierzu können beispielsweise LED unterschiedlicher Wellenlängen vorgesehen sein, wobei eine Wellenlänge einem vorgegebenen Zustand (z. B. Gasdruck im Vorgabegebereich) entspricht. Dadurch kann auch mit einer Kamera mit geringer Auflösung der Zustand leicht erfasst werden.

Es ist ferner denkbar, dass ein Momentsensor vorgesehen ist, der dazu ausgeführt ist, ein auf das Einstellelement aufbringbares Moment zu erfassen. Dadurch kann der Status des Aktors überprüft werden. Insbesondere lässt sich so eine Fernwartung des Aktors ausführen und frühzeitig, insbesondere vor einem Versagen, feststellen, wenn der Aktor ausgetauscht werden muss. Ebenfalls kann verhindert werden, dass der Aktor das Einstellelement über einen Endanschlag hinausbewegt. Es kann ferner vorgesehen sein, dass hierzu alternativ oder in Ergänzung zumindest ein Endanschlagssensor, insbesondere kapazitiv oder induktiv ausgeführt, vorgesehen ist.

Auch ist es denkbar, dass ein Vibrationssensor vorgesehen ist, der dazu ausgeführt ist, eine Vibration zumindest des Gasdruckregelgerätes oder des Aktors zu erfassen. Um die gleiche Energiedichte wie von Erdgas mit Wasserstoff zu übertragen muss letzterer ca. dreimal so schnell fließen. Durch die stark erhöhte Fließgeschwindigkeit ergeben sich spezifische, andere Vibrationen am Gasdruckregelgerät. Diese können durch den Vibrationssensor erfasst und für die Regelung des Gasdruckregelgerätes über eine erfindungsgemäße Steuervorrichtung genutzt werden.

Im Rahmen der Erfindung ist es optional möglich, dass eine Vibrationsauswerteeinheit vorgesehen ist, welche dazu ausgeführt ist, zumindest ein Regelverhalten des Gasdruckregelgerätes anhand von Vibrationsmessdaten zumindest zu überwachen oder einzustellen. Die Vibrationsauswerteeinheit kann ein Teil einer Recheneinheit sein. Die Auswertung der Vibrationen, welche von dem das Gasdruckregelgerät durchströmenden Gas, insbesondere zumindest Erdgas oder Wasserstoff, zumindest teilweise verursacht werden, kann durch die Vibrationsauswerteeinheit erfolgen. Durch die Auswertung erlangten Informationen kann eine effektive Regelung vorgenommen werden, um den gewünschten Ausgangsdruck des Gasdruckregelgerätes zumindest zu ermitteln oder einzustellen.

Ferner kann es im Rahmen der Erfindung vorgesehen sein, dass die Kommunikationsvorrichtung dazu ausgeführt ist, eine Echtzeitanbindung zumindest an eine Lastwarte oder ein mobiles Steuergerät bereitzustellen. Unter einer Echtzeitanbindung kann eine Verbindung verstanden werden, welche dazu ausgeführt ist, dass Programme zur Verarbeitung anfallender Daten ständig betriebsbereit sind, derart, dass die Verarbeitungsergebnisse innerhalb einer vorgegebenen Zeitspanne verfügbar sind. Die vorgegebene Zeitspanne kann insbesondere weniger als eine Sekunde, insbesondere weniger als 100 ms betragen.

In Bezug auf die vorliegende Erfindung ist es vorstellbar, dass zumindest ein Niederdrucksensor vorgesehen ist, der dazu ausgeführt ist, den Druck im Niederdruckbereich zu erfassen, oder ein Hochdrucksensor vorgesehen ist, der dazu ausgeführt ist, den Druck im Hochdruckbereich zu erfassen. Durch die Drucksensoren kann der Druck im Netz bzw. kurz vor und/oder hinter dem Gasdruckregelgerät erfasst werden. Dadurch kann der Einfluss der Position des Stellgliedes unmittelbar bestimmt werden. Es kann vorgesehen sein, dass die Auswertung durch eine Recheneinheit erfolgt. Die Recheneinheit kann Teil der Steuervorrichtung sein oder beabstandet, beispielsweise als Teil der Netzsteuerung, ausgeführt sein. Es kann vorgesehen sein, dass die Messwerte zumindest des Mittel- und/oder Niederdrucksensors oder des Hochdrucksensors über die Kommunikationsvorrichtung als Messsignal an die Netzsteuerung sendbar ist.

Ferner ist es vorstellbar, dass ein Stellsensor vorgesehen ist, welcher dazu ausgeführt ist, die Stellung zumindest eines Sicherheitsabsperrventils oder eines Sicherheitsabblaseventils zu erfassen. Durch den oder die Stellsensoren kann die Stellung der Sicherheitsventile erfasst und in die Steuerung des Gasdruckregelgerätes einbezogen werden. Es kann vorgesehen sein, dass das Steuersignal einen Sollwert für die Stellung zumindest des Sicherheitsabsperrventils oder des Sicherheitsabblaseventils umfasst. Dadurch können die Ventile beispielsweise wieder geöffnet werden, sobald ein Fehler, welcher zum Schließen der Ventile geführt hat, behoben wurde. Des Weiteren wird dadurch sichergestellt, dass sich der Bereich der eingestellten Ausgangsdruckregelung innerhalb der Einstellgrenzen entsprechend dem Druckstaffeldiagramm befindet und so ein Auslösen der Sicherheitsabsperrventile und Sicherheitsabblaseventile im Normalbetrieb verhindert wird.

Im Rahmen der Erfindung kann es von Vorteil sein, dass ein Impulsgeber vorgesehen ist, der dazu ausgeführt ist, zumindest zwei Sicherheitsabsperrventile oder Sicherheitsabblaseventile zeitgleich anzusteuern. Hierdurch kann insbesondere vermieden werden, dass sich die Ventile gegenseitig Blockieren oder eine Fehlfunktion ausgelöst wird. Des Weiteren kann so auch der Arbeitsdruckbereich und Ansprechdruck (obere und untere Abschaltung) von Sicherheitsabsperrventilen und Sicherheitsabblaseventilen über eine gleichartige erfinderische Lösung eingestellt und im Rahmen der notwendigen Ausgangsdruckanpassung ebenfalls an die neuen Bedingungen angepasst werden.

Die obenstehende Aufgabe wird ferner gelöst durch ein erfindungsgemäßes Gasdruckregelgerät, aufweisend zumindest eine Steuervorrichtung, insbesondere eine erfindungsgemäßes Steuervorrichtung, für das Gasdruckregelgerät mit einem Einstellelement zum Regeln eines Druckverlaufs zwischen einem Hochdruckbereich und einem Mittel- und/oder Niederdruckbereich eines Gasnetzes, aufweisend:
- einen Aktor, welcher dazu ausgeführt ist, das Einstellelement zu bewegen,
- einen Adapter, welcher mit dem Aktor verbunden und dazu ausgeführt ist, an einem Dom, in dem das Einstellelement angeordnet ist, befestigt zu werden,
- eine Kommunikationsvorrichtung, welche dazu ausgeführt ist, zumindest ein Steuersignal zum Steuern des Aktors zu empfangen und an den Aktor zu übermitteln,
wobei das Steuersignal von einer von der Kommunikationsvorrichtung beabstandeten Netzsteuerung sendbar ist.

Es kann vorgesehen sein, dass eine Erfassung der SAV und SBV Einstellwerte, insbesondere durch SAV und/oder SBV Stellsensoren, vorgesehen ist. Ferner kann das Steuersignal, welche insbesondere auf den Einstellwerten basiert, Steuerungswerte zum ansteuern einer Aktorik des SAV und/oder SBV umfassen.

Damit ergeben sich in Bezug auf ein erfindungsgemäßes Gasdruckregelgerät die gleichen Vorteile, wie sie bereits in Bezug auf eine erfindungsgemäße Steuervorrichtung beschrieben worden sind.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigt

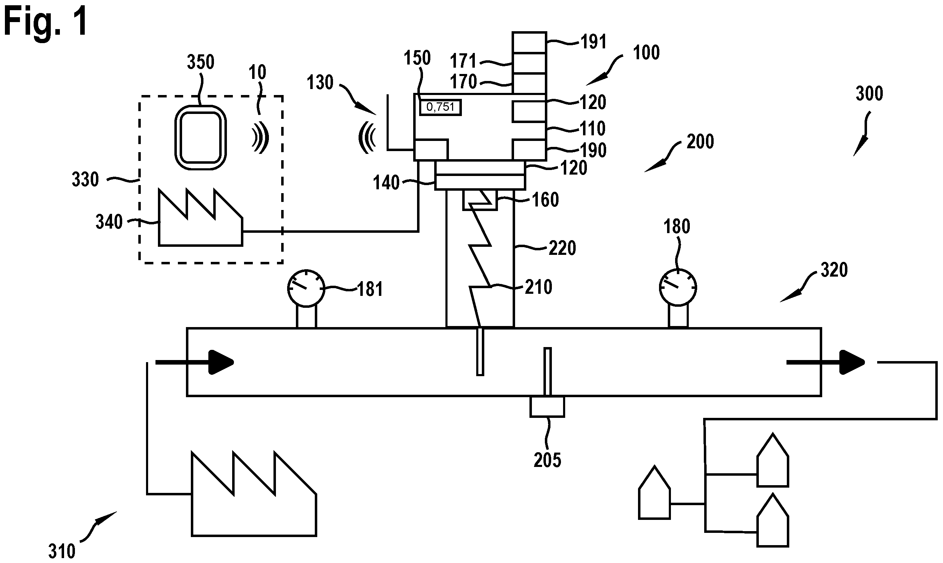

Fig. 1: eine Steuervorrichtung für ein Gasdruckregelgerät und ein Gasdruckregelgerät.

In den nachfolgenden Figuren werden für die gleichen technischen Merkmale, auch von unterschiedlichen Ausführungsbeispielen, die identischen Bezugszeichen verwendet.

Die Fig. 1 zeigt eine Steuervorrichtung 100 für ein Gasdruckregelgerät 200 mit einem Einstellelement 210 zum Regeln eines Druckverlaufs zwischen einem Hochdruckbereich 310 und einem Mittel- und/oder Niederdruckbereich 320 eines Gasnetzes 300, aufweisend:
- einen Aktor 110, welcher dazu ausgeführt ist, das Einstellelement 210 zu bewegen,
- einen Adapter 120, welcher mit dem Aktor 110 verbunden und dazu ausgeführt ist, an einem Dom 220, in dem das Einstellelement 210 angeordnet ist, befestigt zu werden,
- eine Kommunikationsvorrichtung 130, welche dazu ausgeführt ist, zumindest ein Steuersignal 10 zum Steuern des Aktors 110 zu empfangen und an den Aktor 110 zu übermitteln,
wobei das Steuersignal 10 von einer von der Kommunikationsvorrichtung 130 beabstandeten Netzsteuerung 330 sendbar ist.

Insgesamt bietet ein erfindungsgemäße Steuervorrichtung 100 den Vorteil, ein Gasdruckregelgerät 200 flexibel, auch aus der Ferne, steuern und an wechselnde Anforderungen in Bezug auf Drücke im Gasnetz 300 anpassen zu können. Der Aktor 110 kann das Stellelement entsprechend eines Steuersignals 10 bewegen, sodass das Einstellelement 210 den Druckverlauf des Gasdruckregelgerätes 200 einstellt. Durch den Adapter 120 kann der Aktor 110 einfach, schnell und kostengünstig auf den Dom 220 des Gasdruckregelgerätes 200 gesetzt und bei Bedarf auch wieder abgenommen werden. Durch die Kommunikationsvorrichtung 130 kann das Steuersignal 10 auch dann an den Aktor 110 übergeben werden, wenn kein unmittelbarer physikalischer Zugriff der steuernden Person gegeben ist. Dadurch kann beispielsweise auf die wechselnden Anforderungen (z. B. schwankende Drücke beim Wechsel des Gases oder im Mischbetrieb), welche durch den Betrieb des Gasnetzes 300 mit Wasserstoff entstehen, flexibler reagiert werden.

Im Rahmen der Erfindung kann es von Vorteil sein, dass zumindest der Aktor 110, der Adapter 120 oder die Kommunikationsvorrichtung 130 dazu ausgeführt sind, als Retrofit zumindest an einem manuell betriebenen oder lokal gesteuerten Gasdruckregelgerät 200 angeordnet zu werden. Unter einem Retrofit kann eine Vorrichtung verstanden werden, die dazu ausgeführt ist, zumindest einen Teil einer Baugruppe zumindest zu ersetzen oder zu ergänzen und dadurch die Funktionalität der Baugruppe zu erweitern. Es kann vorgesehen sein, dass der Aktor 110 einen manuellen Stellantrieb ersetzt. Ferner kann vorgesehen sein, dass der Adapter 120 einen Abschluss des Doms 220, insbesondere an dem der manuelle Stellantrieb befestigbar ist, zu ersetzen. Durch die Ausführung als Retrofit wird der Vorteil erreicht, dass auch Gasdruckregelgeräte 200 mit manueller Steuerung ohne großen Aufwand funktionell dahingehend ergänzt werden können, als dass eine Steuerung aus der Ferne ermöglicht wird.

Im Rahmen der Erfindung ist es denkbar, dass eine Gegenhalterung 140 vorgesehen ist, welche dazu ausgeführt ist, am Dom 220 befestigt zu werden und Momente des Aktors 110 aufzunehmen. Es kann insbesondere vorgesehen sein, dass die Gegenhalterung 140 dazu ausgeführt ist, zumindest ein maximales Moment, insbesondere Drehmoment, des Aktors 110 aufzunehmen. Hierdurch wird sichergestellt, dass die Verbindung zwischen dem Adapter 120 und dem Aktor 110 mit dem Dom 220 auch dann sicher hält, wenn der Aktor 110 das Einstellelement 210 mit dem maximalen Moment verstellt. Zudem kann mit einer an den Dom 220 angepassten Gegenhalterung 140 die Montage vereinfacht werden.

Es kann im Rahmen der Erfindung vorgesehen sein, dass eine Anzeige 150 vorgesehen ist, die dazu ausgeführt ist, zumindest einen Wert anzuzeigen, welcher für den Zustand zumindest des Gasdruckregelgerätes 200, des Aktors 110 oder der Kommunikationsvorrichtung 130 spezifisch ist. Dies bietet den Vorteil, dass der Zustand zumindest des Gasdruckregelgerätes 200, des Aktors 110 oder der Kommunikationsvorrichtung 130 unmittelbar erfasst werden kann, ohne dass das Gasdruckregelgerät 200 geöffnet werden muss. Darüber hinaus kann vorgesehen sein, dass das Display dazu ausgeführt ist, den Zustand in einer Art und Weise anzuzeigen, die von einer Kamera aufgenommen werden kann. Hierzu können beispielsweise LED unterschiedlicher Wellenlängen vorgesehen sein, wobei eine Wellenlänge einem vorgegebenen Zustand (z. B. Gasdruck im Vorgabegebereich) entspricht. Dadurch kann auch mit einer Kamera mit geringer Auflösung der Zustand leicht erfasst werden.

Es ist ferner denkbar, dass ein Momentsensor 160 vorgesehen ist, der dazu ausgeführt ist, ein auf das Einstellelement 210 aufbringbares Moment zu erfassen. Dadurch kann der Status des Aktors 110 überprüft werden. Insbesondere lässt sich so eine Fernwartung des Aktors 110 ausführen und frühzeitig, insbesondere vor einem Versagen, feststellen, wenn der Aktor 110 ausgetauscht werden muss. Ebenfalls kann verhindert werden, dass der Aktor 110 das Einstellelement 210 über einen Endanschlag hinausbewegt. Es kann ferner vorgesehen sein, dass hierzu alternativ oder in Ergänzung zumindest ein Endanschlagssensor, insbesondere kapazitiv oder induktiv ausgeführt, vorgesehen ist.

Auch ist es denkbar, dass ein Vibrationssensor 170 vorgesehen ist, der dazu ausgeführt ist, eine Vibration zumindest des Gasdruckregelgerätes 200 oder des Aktors 110 zu erfassen. Um die gleiche Energiedichte wie von Erdgas mit Wasserstoff zu übertragen muss letzterer ca. dreimal so schnell fließen. Durch die stark erhöhte Fließgeschwindigkeit ergeben sich spezifische, andere Vibrationen am Gasdruckregelgerät 200. Diese können durch den Vibrationssensor 170 erfasst und für die Regelung des Gasdruckregelgerätes 200 über eine erfindungsgemäße Steuervorrichtung 100 genutzt werden.

Im Rahmen der Erfindung ist es optional möglich, dass eine Vibrationsauswerteeinheit 171 vorgesehen ist, welche dazu ausgeführt ist, zumindest ein Regelverhalten des Gasdruckregelgerätes 200 anhand von Vibrationsmessdaten zumindest zu überwachen oder einzustellen. Die Auswertung der Vibrationen, welche von dem das Gasdruckregelgerät 200 durchströmenden Gas, insbesondere zumindest Erdgas oder Wasserstoff, zumindest teilweise verursacht werden, kann durch die Vibrationsauswerteeinheit 171 erfolgen. Durch die durch die Auswertung erlangten Informationen kann eine effektive Regelung vorgenommen werden, um den gewünschten Ausgangsdruck des Gasdruckregelgerätes 200 zumindest zu ermitteln oder einzustellen.

Ferner kann es im Rahmen der Erfindung vorgesehen sein, dass die Kommunikationsvorrichtung 130 dazu ausgeführt ist, eine Echtzeitanbindung zumindest an eine Lastwarte 340 oder ein mobiles Steuergerät 350 bereitzustellen. Unter einer Echtzeitanbindung kann eine Verbindung verstanden werden, welche dazu ausgeführt ist, dass Programme zur Verarbeitung anfallender Daten ständig betriebsbereit sind, derart, dass die Verarbeitungsergebnisse innerhalb einer vorgegebenen Zeitspanne verfügbar sind. Die vorgegebene Zeitspanne kann insbesondere weniger als eine Sekunde, insbesondere weniger als 100 ms betragen.

In Bezug auf die vorliegende Erfindung ist es vorstellbar, dass zumindest ein Mittel- und/oder Niederdrucksensor 180 vorgesehen ist, der dazu ausgeführt ist, den Druck im Mittel- und/oder Niederdruckbereich 320 zu erfassen, oder ein Hochdrucksensor 181 vorgesehen ist, der dazu ausgeführt ist, den Druck im Hochdruckbereich 310 zu erfassen. Durch die Drucksensoren kann der Druck im Netz bzw. kurz vor und/oder hinter dem Gasdruckregelgerät 200 erfasst werden. Dadurch kann der Einfluss der Position des Stellgliedes unmittelbar bestimmt werden. Es kann vorgesehen sein, dass die Auswertung durch eine Recheneinheit erfolgt. Die Recheneinheit kann Teil der Steuervorrichtung 100 sein oder beabstandet, beispielsweise als Teil der Netzsteuerung 330, ausgeführt sein. Es kann vorgesehen sein, dass die Messwerte zumindest des Niederdrucksensors 180 oder des Hochdrucksensors 181 über die Kommunikationsvorrichtung 130 als Messsignal an die Netzsteuerung 330 sendbar ist.

Ferner ist es vorstellbar, dass ein Stellsensor 190 vorgesehen ist, welcher dazu ausgeführt ist, die Stellung zumindest eines Sicherheitsabsperrventils oder eines Sicherheitsabblaseventils zu erfassen. Durch den oder die Stellsensoren 190 kann die Stellung der Sicherheitsventile erfasst und in die Steuerung des Gasdruckregelgerätes 200 einbezogen werden. Es kann vorgesehen sein, dass das Steuersignal 10 einen Sollwert für die Stellung zumindest des Sicherheitsabsperrventils oder des Sicherheitsabblaseventils umfasst. Dadurch können die Ventile beispielsweise wieder geöffnet werden, sobald ein Fehler, welcher zum Schließen der Ventile geführt hat, behoben wurde.

Der Sollwert für die Stellung des SAV kann über ein gleichgeartete Aktorik ebenfalls entsprechend der Druckeinstellungnsnotwendigkeiten angepasst werden, so dass im Rahmen der Druckeinstellungen am Regler 210 die Auslösung der SAV (SBV) sicher verhindert werden kann.

Im Rahmen der Erfindung kann es von Vorteil sein, dass ein Impulsgeber 191 vorgesehen ist, der dazu ausgeführt ist, zumindest zwei Sicherheitsabsperrventile oder Sicherheitsabblaseventile zeitgleich anzusteuern. Hierdurch kann insbesondere vermieden werden, dass sich die Ventile gegenseitig Blockieren oder eine Fehlfunktion ausgelöst wird.

Ferner zeigt die Fig. 1 auch ein erfindungsgemäßes Gasdruckregelgerät 200, aufweisend zumindest eine Steuervorrichtung 100, insbesondere eine erfindungsgemäße Steuervorrichtung 100, für das Gasdruckregelgerät 200 mit einem Einstellelement 210 zum Regeln eines Druckverlaufs zwischen einem Hochdruckbereich 310 und einem Niederdruckbereich 320 eines Gasnetzes 300, aufweisend:
- einen Aktor 110, welcher dazu ausgeführt ist, das Einstellelement 210 zu bewegen,
- einen Adapter 120, welcher mit dem Aktor 110 verbunden und dazu ausgeführt ist, an einem Dom 220, in dem das Einstellelement 210 angeordnet ist, befestigt zu werden,
- eine Kommunikationsvorrichtung 130, welche dazu ausgeführt ist, zumindest ein Steuersignal 10 zum Steuern des Aktors 110 zu empfangen und an den Aktor 110 zu übermitteln,
wobei das Steuersignal 10 von einer von der Kommunikationsvorrichtung 130 beabstandeten Netzsteuerung 330 sendbar ist. Diese inkludiert auch die aktuelle Erfassung der SAV und SBV Einstellwerte und die daraus ableitbare Ansteuerung gleichartiger Aktorik an SAV und SBV.

Damit ergeben sich in Bezug auf ein erfindungsgemäßes Gasdruckregelgerät die gleichen Vorteile, wie sie bereits in Bezug auf eine erfindungsgemäße Steuervorrichtung beschrieben worden sind.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Steuersignal
- 100: Steuervorrichtung
- 110: Aktor
- 120: Adapter
- 130: Kommunikationsvorrichtung
- 140: Gegenhalterung
- 150: Anzeige
- 160: Momentsensor
- 170: Vibrationssensor
- 171: Vibrationsauswerteeinheit
- 180: Niederdrucksensor
- 181: Hochdrucksensor
- 190: Stellsensor
- 191: Impulsgeber

- 200: Gasdruckregelgerät
- 205: Sicherheitsabsperrventil
- 210: Einstellelement
- 220: Dom

- 300: Gasnetz
- 310: Hochdruckbereich
- 320: Niederdruckbereich
- 330: Netzsteuerung
- 340: Lastwarte
- 350: Steuergerät

## Patentansprüche

1. Steuervorrichtung (100) für ein Gasdruckregelgerät (200) mit einem Einstellelement (210) zum Regeln eines Druckverlaufs zwischen einem Hochdruckbereich (310) und einem Mittel- und/oder Niederdruckbereich (320) eines Gasnetzes (300), aufweisend:
- einen Aktor (110), welcher dazu ausgeführt ist, das Einstellelement (210) zu bewegen,
- einen Adapter (120), welcher mit dem Aktor (110) verbunden und dazu ausgeführt ist, an einem Dom (220), in dem das Einstellelement (210) angeordnet ist, befestigt zu werden,
- eine Kommunikationsvorrichtung (130), welche dazu ausgeführt ist, zumindest ein Steuersignal (10) zum Steuern des Aktors (110) zu empfangen und an den Aktor (110) zu übermitteln,
wobei das Steuersignal (10) von einer von der Kommunikationsvorrichtung (130) beabstandeten Netzsteuerung (330) sendbar ist.

2. Steuervorrichtung (100) nach Anspruch 1,
**dadurch gekennzeichnet,**
**dass** zumindest der Aktor (110), der Adapter (120) oder die Kommunikationsvorrichtung (130) dazu ausgeführt sind, als Retrofit zumindest an einem manuell betriebenen oder lokal gesteuerten Gasdruckregelgerät (200) angeordnet zu werden.

3. Steuervorrichtung (100) nach Anspruch 1 oder 2,
**dadurch gekennzeichnet,**
**dass** eine Gegenhalterung (140) vorgesehen ist, welche dazu ausgeführt ist, am Dom (220) befestigt zu werden und Momente des Aktors (110) aufzunehmen.

4. Steuervorrichtung (100) nach einem der vorhergehenden Ansprüche,
**dadurch gekennzeichnet,**
**dass** der Adapter (120) einen Schnellverschluss aufweist, wobei der Schnellverschluss insbesondere als Bajonettverschluss, Gelenkverschluss oder Schraubgewindeverschluss ausgeführt ist.

5. Steuervorrichtung (100) nach einem der vorhergehenden Ansprüche,
**dadurch gekennzeichnet,**
**dass** eine Anzeige (150) vorgesehen ist, die dazu ausgeführt ist, zumindest einen Wert anzuzeigen, welcher für den Zustand zumindest des Gasdruckregelgerätes (200), des Aktors (110) oder der Kommunikationsvorrichtung (130) spezifisch ist.

6. Steuervorrichtung (100) nach einem der vorhergehenden Ansprüche,
**dadurch gekennzeichnet,**
**dass** ein Drehmomentsensor (160) vorgesehen ist, der dazu ausgeführt ist, ein auf das Einstellelement (210) aufbringbares Moment zu erfassen.

7. Steuervorrichtung (100) nach einem der vorhergehenden Ansprüche,
**dadurch gekennzeichnet,**
**dass** ein Vibrationssensor (170) vorgesehen ist, der dazu ausgeführt ist, eine Vibration zumindest des Gasdruckregelgerätes (200) oder des Aktors (110) zu erfassen.

8. Steuervorrichtung (100) nach einem der vorhergehenden Ansprüche,
**dadurch gekennzeichnet,**
**dass** eine Vibrationsauswerteeinheit (171) vorgesehen ist, welche dazu ausgeführt ist, zumindest ein Regelverhalten des Gasdruckregelgerätes (200) anhand von Vibrationsmessdaten zumindest zu überwachen oder einzustellen.

9. Steuervorrichtung (100) nach einem der vorhergehenden Ansprüche,
**dadurch gekennzeichnet,**
**dass** die Kommunikationsvorrichtung (130) dazu ausgeführt ist, eine Echtzeitanbindung zumindest an eine Lastwarte (340) oder ein mobiles Steuergerät (350) bereitzustellen.

10. Steuervorrichtung (100) nach einem der vorhergehenden Ansprüche,
**dadurch gekennzeichnet,**
**dass** Kommunikationsvorrichtung (130) als Datenfernübertragungs-Modul (DFÜ) und/oder als Electronic Data Interchange (EDI) ausgeführt ist, und/oder dass das Steuersignal (10) als analoges Steuersignal, digitales Steuersignal, Pulsweitenmodulations-Signal und/oder Frequenzmodulations-Signal ausgeführt ist.

11. Steuervorrichtung (100) nach einem der vorhergehenden Ansprüche,
**dadurch gekennzeichnet,**
**dass** zumindest ein Mittel- und/oder Niederdrucksensor (180) vorgesehen ist, der dazu ausgeführt ist, den Druck im Niederdruckbereich (320) zu erfassen, oder ein Hochdrucksensor (181) vorgesehen ist, der dazu ausgeführt ist, den Druck im Hochdruckbereich (310) zu erfassen.

12. Steuervorrichtung (100) nach einem der vorhergehenden Ansprüche,
**dadurch gekennzeichnet,**
**dass** ein Stellsensor (190) vorgesehen ist, welcher dazu ausgeführt ist, die Stellung zumindest eines Sicherheitsabsperrventils oder eines Sicherheitsabblaseventils zu erfassen.

13. Steuervorrichtung (100) nach Anspruch 12,
**dadurch gekennzeichnet,**
**dass** das Steuersignal (10) einen Sollwert für die Stellung zumindest des Sicherheitsabsperrventils oder des Sicherheitsabblaseventils umfasst.

14. Steuervorrichtung (100) nach einem der vorhergehenden Ansprüche,
**dadurch gekennzeichnet,**
**dass** ein Impulsgeber (191) vorgesehen ist, der dazu ausgeführt ist, zumindest zwei Sicherheitsabsperrventile oder Sicherheitsabblaseventile zeitgleich anzusteuern.

15. Gasdruckregelgerät (200), aufweisend zumindest eine Steuervorrichtung (100), insbesondere nach einem der vorhergehenden Ansprüche, für das Gasdruckregelgerät (200) mit einem Einstellelement (210) zum Regeln eines Druckverlaufs zwischen einem Hochdruckbereich (310) und einem Niederdruckbereich (320) eines Gasnetzes (300), aufweisend:
- einen Aktor (110), welcher dazu ausgeführt ist, das Einstellelement (210) zu bewegen,
- einen Adapter (120), welcher mit dem Aktor (110) verbunden und dazu ausgeführt ist, an einem Dom (220), in dem das Einstellelement (210) angeordnet ist, befestigt zu werden,
- eine Kommunikationsvorrichtung (130), welche dazu ausgeführt ist, zumindest ein Steuersignal (10) zum Steuern des Aktors (110) zu empfangen und an den Aktor (110) zu übermitteln,
wobei das Steuersignal (10) von einer von der Kommunikationsvorrichtung (130) beabstandeten Netzsteuerung (330) sendbar ist.
